# EUROPÄISCHE PATENTANMELDUNG

(11) **EP 2 665 025 A1**
(43) Veröffentlichungstag der Anmeldung: **20.11.2013**
(21) Anmeldenummer: 13164317.3
(22) Anmeldetag: 18.04.2013
(51) Int. Cl.: G06Q 20/38, G06Q 30/02

(54) **Voucher und Verfahren zur Ausgabe, Validierung und Einlösung eines solchen**

(30) Priorität: 14.05.2012 DE 102012104183
(71) Anmelder: M&M Werbeagentur GmbH, 69207 Sandhausen (DE)
(72) Erfinder: Dibo, Jörg Michael, 69207 Sandhausen (DE)
(74) Vertreter: Geitz Truckenmüller Lucht

(57) **Zusammenfassung**

Bekannte Voucher-Systeme erfordern bei der Validierung zunächst einen Scan der Artikelnummer und in einem zweiten Schritt einen Scan der Seriennummer des betreffenden Produktes. Da diese in separaten Barcodes vorliegen und viele Kassen nicht über einen Handscanner verfügen, werden häufig beide Barcodes gleichzeitig oder in der falschen Reihenfolge gescannt, was zu Fehlermeldungen und Abbrüchen des Vorgangs führt.

Die vorliegende Erfindung löst dieses Problem dadurch, dass beide Nummern in einem speziell kodierten, gemeinsamen 128-Bit-Barcode in einem Durchgang gescannt werden, was neben einer Lösung des oben geschilderten Problems eine zusätzliche deutliche Vereinfachung und Beschleunigung des Vorgangs mit sich bringt.

## Beschreibung

Die vorliegende Erfindung betrifft einen Voucher zur Verwendung als Geschenk- oder Rabattgutschein, welcher eine Artikelnummer und eine Seriennummer eines Geschenks bzw. eines Rabattes maschinenlesbar in Barcode-Form trägt, sowie jeweils ein Verfahren zur Ausgabe, Validierung und Einlösung eines solchen Vouchers.

Derartige Voucher sind aus dem Stand der Technik bereits vielfältig bekannt. Beispielsweise bietet die Firma Apple mit ihrem Produkt iTunes Guthabenkarten an, welche als Geschenkgutschein erworben werden können. Die Parameter eines solchen Gutscheins müssen dabei auf der Gutscheinkarte enthalten sein, insbesondere der Wert des Gutscheins, der Gutscheinanbieter und ein den speziellen Gutschein individualisierenden Code in Form einer Seriennummer.

Wie viele andere Produktanbieter auch, druckt Apple in diesem Fall schon bei der Produktion der Karten alle relevanten Daten auf der Gutscheinkarte auf oder fügt sie in einer von außen nicht lesbaren Form bei. Bei einem Diebstahl dieser Karten wären somit alle zum Einlösen benötigten Daten direkt auf der Karte enthalten, wodurch ein hoher Schaden entstehen könnte. Aus diesem Grund werden solche Gutscheinkarten in einem deaktivierten Zustand ausgeliefert und erst beim Verkauf direkt beim Produktanbieter aktiviert. Für eine solche Aktivierung müssen die Daten des Gutscheins, also im Wesentlichen die Seriennummer und eine Artikelnummer, welche die Art des Gutscheins und ggf. seinen Wert charakterisiert, an den Produktanbieter übermittelt werden.

Die bekannten Lösungen sehen hierzu vor, in einem ersten Schritt die Artikelnummer einzuscannen und die in einem separaten, beispielsweise EAN13-Barcode codierte Seriennummer in einem zweiten Schritt hinzuzufügen. Dies ist grundsätzlich unproblematisch, nachdem alle modernen Kassensysteme heutzutage über Scanner verfügen. Mithilfe von Barcodes werden so Produkte identifiziert, wobei je nach Ausstattung der Kasse mit einem so genannten Prepaid-Modul auch Aktivierungsdaten für derartige Gutscheinkarten erfasst und bearbeitet werden können.

Insbesondere bei solchen Kassensystemen, welche ausschließlich über einen in die Fläche des Förderbandes integrierten Scanner verfügen, stellt es jedoch ein Problem dar, dass sich auf der Gutscheinkarte zwei Barcodes befinden. Hierbei kann es zu Fehlscans kommen, wenn die Barcodes in einer falschen Reihenfolge eingescant werden oder gegebenenfalls auch überhaupt nicht lesbar sind. Darüber hinaus ist durch diesen zweifachen Scanvorgang grundsätzlich eine potenzielle Fehlerquelle installiert.

Vor diesem Hintergrund liegt der vorliegenden Erfindung die Aufgabe zu Grunde, Fehlscans bei Gutscheinkarten mit zwei oder mehr Barcodes zu verhindern und die Abläufe schneller und für das Personal einfacher und weniger fehleranfällig zu gestalten.

Dies löst die vorliegende Erfindung mit einem Voucher zur Verwendung als Geschenk- oder Rabattgutschein gemäß den Merkmalen des Anspruchs 1. Ebenfalls wird dies gelöst durch ein Verfahren zur Ausgabe eines Vouchers gemäß Anspruch 10, ein Verfahren zur Validierung eines Vouchers gemäß Anspruch 12 und ein Verfahren zum Einlösen eines Vouchers gemäß Anspruch 14, welche durch die jeweils zugehörigen Unteransprüche sinnvoll ausgestaltet werden.

Erfindungsgemäß ist hierzu vorgesehen, dass die erforderlichen Daten des Vouchers, nämlich insbesondere die Artikelnummer und die Seriennummer, in einem gemeinsamen Barcode zusammengefasst sind. Hierdurch ist es lediglich erforderlich, dass bei dem Kassensystem ein Barcode eingescant wird, aus dem sich sämtliche für den gesamten Vorgang erforderlichen Daten ergeben. Ein zweites Scannen ist nicht erforderlich, so dass der Vorgang beschleunigt wird. Durch das Fehlen eines zweiten Barcodes ist ebenfalls ein mögliches Scannen in der falschen Reihenfolge vermieden.

Insbesondere kann erfindungsgemäß hierfür ein spezieller, so genannter GS1-128 Barcode verwendet werden, wobei es sich um einen 128-Bit-Barcode handelt. Der erfindungsgemäße Aufbau dieses Barcodes ist so gestaltet, dass er im Wesentlichen aus einer Artikelnummer und einer so genannten primären Kontennummer besteht. Diese beiden Abschnitte des Barcodes, welche die Artikelnummer und die primäre Kontennummer repräsentieren, sind mithilfe von Steuerzeichen voneinander getrennt, ein Steuerzeichen steht am Anfang des Barcodes. Die primäre Kontennummer unterteilt sich nochmals in vorzugsweise drei Abschnitte, nämlich die eingangs genannte Seriennummer und darüber hinaus eine so genannte Produkt-ID und eine einen Anbieter des Vouchers identifizierende Bank-ID.

Aufgrund der Steuerzeichen ist das Kassensystem in der Lage, die einzelnen Nummern voneinander zu unterscheiden, wobei insbesondere aufgrund der Bank-ID das System den Anbieter identifizieren kann. Auch diese Bank-ID gibt insoweit einen Hinweis auf den Aufbau des Barcodes, so dass beispielweise bei einem Anbieter, welcher aus der Bank-ID hervorgeht, ein erster Aufbau, bei einem anderen Anbieter ein anderer Aufbau gewählt werden kann. Aufgrund der Bank-ID ortet das Kassensystem einen Barcode-Aufbau diesem Anbieter zu.

Grundsätzlich bestehen verschiedene Möglichkeiten, derartige Geschenk- oder Rabattgutscheine auszuführen. Eine sehr einfache Ausführungsform besteht in einem Papier-Ausdruck, welcher beispielsweise auf einen Kassenzettel mit ausgedruckt wird. Bei einem solchen Gutschein kann es sich beispielsweise um einen Rabattgutschein handeln, welcher bei einem gewissen Einkaufswert oder zu bestimmten Einkaufszeiten von einem Anbieter gewährt wird.

Eine Alternative sieht jedoch vor, einen solchen Voucher in Form einer Plastikkarte im Kreditkartenformat anzubieten, also in dem üblichen ISO 7810ff.-Format ID-1 mit abgerundeten Ecken. Hierbei handelt es sich in der Regel um Karten aus Polyvinylchlorid, deren Vorderseite frei gestaltet werden kann, auf deren Rückseite dann jedoch die maschinenlesbare Kodierung angeordnet ist.

Eine solche Plastikkarte kann beispielsweise auf einer Trägerkarte angeordnet sein, um die erforderlichen Informationen an den Kunden zu transportieren. Eine solche Anordnung auf der Trägerkarte ist nicht erforderlich, auch eine einzelne, als Plastikkarte im Kreditkartenformat ausgeführte Variante des Vouchers ist von der Erfindung ausdrücklich mit umfasst.

Soweit die Plastikkarte, welche auf ihrer Rückseite den erfindungsgemäßen Barcode trägt, auf einer solchen Trägerkarte angeordnet ist, kann dies durch Kleben oder Einstecken oder dergleichen realisiert sein. Die Trägerkarte weist hierbei eine Fensterung auf, welche den auf der Rückseite der Plastikkarte angeordneten Barcode freigibt. So kann die Plastikkarte gemeinsam mit der Trägerkarte über den Scanner gezogen werden ohne dass der fragliche Barcode auf der Trägerkarte nochmals reproduziert sein müsste.

Um die Möglichkeit sämtlicher Aktivierungsvarianten über eine Karte anbieten zu können, kann die Gutscheinkarte, in Form einer Plastikkarte, einen zusätzlichen Magnetstreifen mit wenigstens einer Datenspur aufweisen, wobei in dieser Datenspur ebenfalls eine Codierung der Artikelnummer und der Seriennummer maschinenlesbar vorhanden ist. Die übliche dritte Methode der Speicherung dieser Daten auf der Plastikkarte sieht vor, die in dem Barcode bzw. dem Magnetstreifen codierten Zeichen im Klartext auf die Karte aufzudrucken. Hierdurch ist es möglich, dass das Personal bei einer Fehlfunktion des Magnetstreifens und des Scanners den Code direkt manuell in das Kassensystem eingibt. Hierbei handelt es sich mehr oder weniger lediglich um eine Notmaßnahme, falls die Lesegeräte im Übrigen nicht funktionieren.

Üblicherweise muss im Falle des Auslesens eines Magnetstreifens die Karte mit ihrer den Magnetstreifen tragenden Kante durch ein Magnetstreifenlesegerät gezogen werden, wozu es üblicherweise erforderlich wäre, die Plastikkarte von ihrer Trägerkarte zu lösen. Stattdessen ist es jedoch vorgesehen, der Trägerkarte eine Falzlinie als Sollknickstelle zuzuordnen, welche die Trägerkarte in einen Haltebereich in einen Knickbereich unterteilt. Der Haltebereich dient hierbei zur Befestigung der Plastikkarte, während der Knickbereich um die Falzlinie herum von der Plastikkarte weggeknickt werden kann. Hierdurch erhält die Plastikkarte einen Überstand über die Trägerkarte, so dass der auf diesem Überstand befindliche Magnetstreifen dann durch das Magnetstreifenlesegerät hindurch gezogen werden kann, ohne dabei die Plastikkarte von der Trägerkarte lösen zu müssen.

Soweit zusätzliche Informationen über die in dem GS1-128-Barcode codierbaren Informationen hinaus benötigt werden, so kann ein weiterer Barcode mit einigem Vorteil auf der Trägerkarte so angeordnet sein, dass dieser zunächst von der Plastikkarte verdeckt bleibt. Erst durch ein Wegknicken des Knickbereichs der Trägerkarte oder ein Entfernen der Plastikkarte von der Trägerkarte wird dieser Barcode freigelegt und kann dann ohne Weiteres auf herkömmlichem Wege vom Kassensystem gescant werden.

Neben dem Aufkleben der Plastikkarte auf der Trägerkarte ist es auch möglich, diese beispielsweise in Schlitze der Trägerkarte einzustecken, wobei in diesem Fall ein Umknicken der Trägerkarte entfallen muss. In diesem Fall ist es auch nicht erforderlich, einen Knickbereich zu definieren, so dass der zuletzt genannte Zusatz-Barcode an beliebiger Stelle unterhalb der Plastikkarte angeordnet werden kann.

Bei der Verwendung des vorstehend beschriebenen Vouchers stellt sich das Verfahren zur Ausgabe, zur Validierung oder zur Einlösung eines solchen Vouchers deutlich vereinfacht dar. Einerseits kann die Ausgabe eines Vouchers, insbesondere üblicherweise der Ausgestaltungen als Plastikkarte, durch den einfachen Verkauf der Plastikkarten erfolgen. Hierbei sieht das Verfahren lediglich vor, im Unterschied zum Stand der Technik lediglich einen anstelle von zwei Barcodes zu scannen. Bei einer solchen Validierung des Vouchers wird also zunächst der einzelne Barcode über ein Kassensystem eingelesen, wobei es sich bei diesem Kassensystem nicht unbedingt nur um eine Kasse, sondern durchaus auch um mit der Kasse verbundene Filial-Server einer Supermarktkette, hiermit verbundene Drucker, Warenwirtschaftssysteme usw. handelt. Die gesamte EDV-Technik innerhalb des Supermarktes wird allgemein im weiteren als "Kassensystem" angesehen. Sobald das Kassensystem also sämtliche aus dem einzelnen Barcode ersichtlichen Daten durch einen einzelnen Scan übernommen hat, liest das Kassensystem aus diesen Daten die Bank-ID heraus und ist aufgrund der hiermit verknüpften Informationen in der Lage, Artikelnummer und Seriennummer zu identifizieren. Artikelnummer und Seriennummer werden dann an eine der Bank-ID zugeordnete zentrale Datenverarbeitungseinrichtung versendet, welche dem Anbieter des Gutscheins zugeordnet ist. In dem Fall, dass es sich bei dem Gutschein um einen Rabattgutschein des Supermarktes bzw. der Verkaufsstelle im Allgemeinen handelt, kann die Rolle dieser zentralen Datenverarbeitungseinrichtung auch von dem Kassensystem selbst eingenommen werden.

Sobald die zentrale Datenverarbeitungseinrichtung sämtliche Daten empfangen hat, prüft diese, ob ein Datensatz mit der gleichen Seriennummer und einer übereinstimmenden Artikelnummer vorhanden ist, um die Echtheit des Gutscheins zu überprüfen. Im Fall eines positiven Ergebnisses dieser Prüfung wird dem Datensatz ein Validierungsvermerk hinzugefügt und eine Bestätigung dieser Validierung an das Kassensystem zurück gemeldet. Die Erstellung der Datensätze erfolgt im Vorfeld des Verkaufs dieser Voucher, bei deren Herstellung und bei deren Versehung mit Art- und Seriennummer.

In dem Fall, in dem ein erfindungsgemäßer Voucher als von der Verkaufsstelle selbst ausgegebener Rabattgutschein verwendet werden soll, wird zunächst ein System innerhalb des Kassensystems die Erfüllung von für die Ausgabe solcher Rabattgutscheine vorgegebenen Bedingungen überprüfen. In dem Fall, dass die Bedingungen für die Ausgabe eines Rabattgutscheines erfüllt sind, wird das Kassensystem einen solchen Rabattgutschein auf einen Kassenbon ausdrucken oder in anderer Weise bereitstellen.

Als mögliche Bedingungen für die Ausgabe von Rabattgutscheinen können gewisse Parameter des Einkaufs angesehen werden, insbesondere Datum und Uhrzeit des Einkaufs und/oder der Wert des Einkaufs. Diese werden an eine zentrale Datenverarbeitungseinrichtung übermittelt, welche dann prüft, ob die für die Ausgabe eines Rabattgutscheines vorgegebenen Bedingungen erfüllt sind. Sofern dies der Fall ist, wird die zentrale Datenverarbeitungseinrichtung einen Datensatz anlegen, welcher eine den Rabattgutscheinen charakterisierende Artikelnummer und eine diesen individualisierende Seriennummer beinhaltet. Diese werden mit einer die zentrale Datenverarbeitungseinrichtung charakterisierenden Bank-ID an das Kassensystem zurückgemeldet und entweder von diesem oder bereits von der Datenverarbeitungseinrichtung in einen 128-Bit-Barcode gemäß dem Standard GS1-128 codiert und dann auf den Kassenbon oder ein separates Medium ausgedruckt.

Das Einlösen eines solchen Vouchers erfolgt analog und beginnt zunächst damit, dass wiederum der Barcode des Vouchers über das Kassensystem eingelesen wird und das Kassensystem diesem die Artikelnummer, Seriennummer und eine Bank-ID entnehmen kann. Artikelnummer und Seriennummer werden sodann an eine der Bank-ID zugeordnete zentrale Datenverarbeitungseinrichtung übermittelt, welche ein Vorhandensein eines Datensatzes mit einer gleichen Seriennummer und übereinstimmender Artikelnummer prüft. Ist dies der Fall, so wird dem Datensatz vonseiten der Datenverarbeitungseinrichtung ein Deaktivierungsvermerk hinzugefügt und an das Kassensystem eine Bestätigung der Einlösung des Vouchers übermittelt. Gegebenenfalls kann zudem ein von dem Kassensystem zu berücksichtigender Gutschriftsbetrag mit übermittelt werden, welcher alternativ allerdings auch direkt im Kassensystem anhand der übermittelten Informationen, insbesondere der Artikelnummer, bestimmt werden kann.

Die vorstehend beschriebene Erfindung wird im Folgenden anhand eines Ausführungsbeispiels näher erläutert.

Es zeigen
- Figur 1: einen erfindungsgemäßen Voucher in Form einer Plastikkarte im Kreditkartenformat in einer Draufsicht auf ihre mit maschinenlesbaren Codes versehene Rückseite,
- Figur 2: eine schematische Darstellung der Einteilung des Barcodes in verschiedene Datenbereiche,
- Figur 3: eine Trägerkarte mit aufgeklebter Plastikkarte im Scheckkartenformat in einer Draufsicht auf die Vorderseite,
- Figur 4: die Trägerkarte gemäß Figur 3 in einer Draufsicht auf die Rückseite,
- Figur 5: die Trägerkarte gemäß Figur 3 in einer Draufsicht auf der Rückseite, wobei ein Knickbereich der Trägerkarte unter Freigabe des Magnetstreifens der Plastikkarte umgeknickt ist,
- Figur 6: eine schematische Darstellung der Abläufe beim Ausdruck eines Rabattgutscheins durch ein Kassensystem, sowie
- Figur 7: eine schematische Darstellung der Abläufe bei der Einlösung eines Rabattgutscheines durch ein Kassensystem.

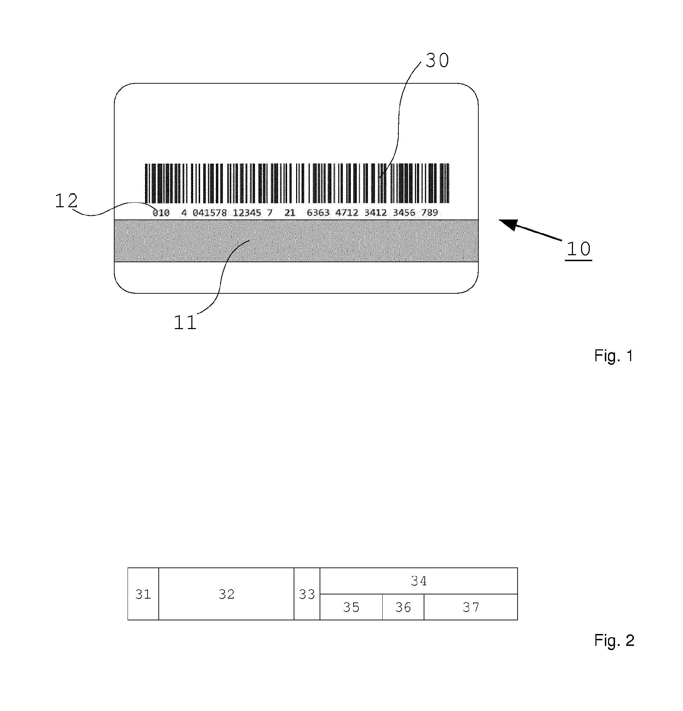

Figur 1 zeigt eine Plastikkarte 10, welche einen Voucher zur Verwendung als Geschenk- oder Rabattgutschein realisiert. Es handelt sich hierbei um eine Plastikkarte 10 im Kreditkartenformat, so dass diese mit einem Magnetstreifenlesegerät, wie dieses für Kreditkarten üblich ist, ausgelesen werden kann. Hierzu weist die Plastikkarte 10 den benötigten, auslesbaren Code in Form eines Barcodes 30 und ergänzend in Form eines Magnetstreifens 11 und einer Klartextangabe 12 auf. Hierdurch ist es ermöglicht, die Plastikkarte 10 auf verschiedene Arten und Weisen im Bereich eines Kassensystems einzulesen.

Insbesondere ist hierbei lediglich ein einziger Barcode 30 vorhanden, welcher im Gegensatz zu bekannten Systemen sämtliche für die Einlösung bzw. Validierung des Vouchers erforderlichen Daten enthält. Ein solcher Barcode 30 kann in einem einzigen Durchgang gescant werden, woraufhin die Daten von dem scannenden Kassensystem ausgewertet und an eine zentrale Datenverarbeitungseinrichtung, welche die Abwicklung der Validierung oder Einlösung des Vouchers vornimmt, übermittelt. Ein mehrfaches Einscannen verschiedener Barcodes und die sich damit ergebenden möglichen Fehler sind damit vermieden, so dass auf diese Weise ein sicheres und gleichzeitig schnelleres Verfahren als derzeit beim Stand der Technik üblich realisiert werden kann.

Figur 2 zeigt schematisch den auf der Plastikkarte 10 verwendeten Barcode, welcher u. a. eine Artikelnummer 32 und eine Seriennummer 37 enthält. Diese Daten sind für eine Auswertung des Vouchers deshalb besonders essenziell, weil die Artikelnummer 32 die Art des Gutscheins festlegt, während die Seriennummer 37 den Gutschein so individualisiert, dass nachvollzogen werden kann, ob ein spezieller Gutschein bewertet oder gegebenenfalls auch bereits entwertet ist. Die Artikelnummer 32 wird hierbei getrennt von einer primären Kontonummer 34, wozu zwischen den beiden Abschnitten ein Steuerzeichen 33 eingefügt ist. Ein weiteres Steuerzeichen 31 ist der Artikelnummer 32 vorangestellt. Die Steuerzeichen dienen dazu, die einzelnen Nummern im Kassensystem voneinander zu separieren und sich beim Einlesen des Barcodes orientieren zu können.

Die primäre Kontennummer 34 ist wiederum unterteilt in eine Bank-ID 35, eine Produkt-ID 36 und eine Seriennummer 37. Insbesondere die Bank-ID 35 charakterisiert hierbei den Anbieter des Gutscheins, so dass eine Interpretation der Daten angesichts dieser Bank-ID direkt vom Kassensystem vorgenommen werden kann. Soweit Daten im Rahmen der Transaktion übersandt werden müssen, kann das Kassensystem anhand dieser Bank-ID 35 ebenfalls entscheiden, wer Ansprechpartner und Empfänger der entsprechenden Daten sein soll.

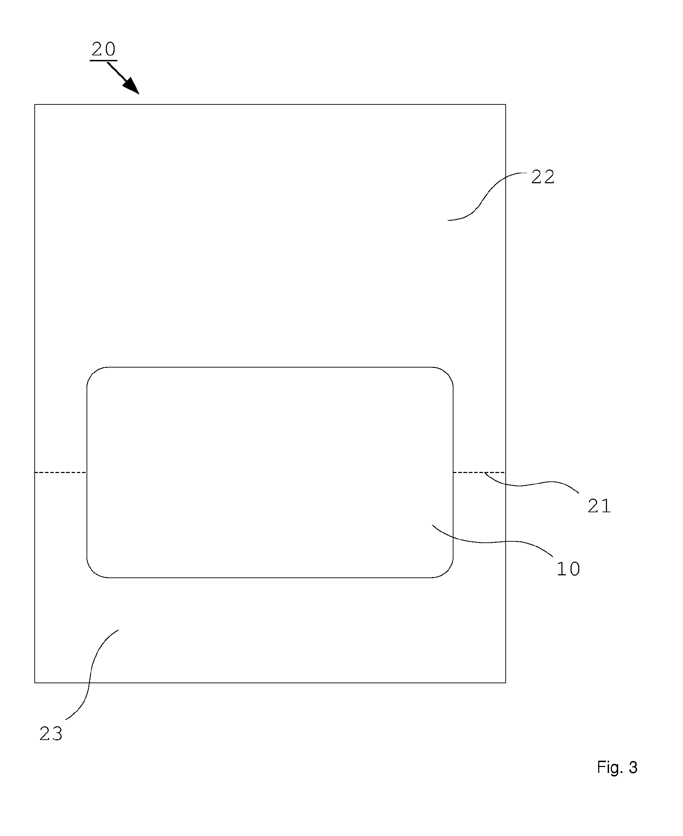

Derartige Plastikkarten können mit einigem Vorteil auf eine Trägerkarte 20 aufgeklebt sein, welche zusätzliche Daten und Hinweise für den Endverbraucher enthalten kann. Figur 3 zeigt insoweit eine Plastikkarte 10, welche auf eine Trägerkarte 20 aufgeklebt ist. Nachdem die Plastikkarte 10, wie in Figur 1 gezeigt, einen Magnetstreifen 11 aufweist, ist dieser in diesem aufgeklebten Zustand nicht ohne Weiteres auslesbar. Deshalb ist die Trägerkarte 20 im Ganzen unterteilt in einen Haltebereich 22 und einen Knickbereich 23, welche von einer Falzlinie 21 getrennt werden. Durch ein Umklappen des Knickbereichs 23 von der Plastikkarte 10 weg wird der Magnetstreifen 11 freigelegt und kann dann trotz des Verbundes zwischen Plastikkarte 10 und Trägerkarte 20 eingelesen werden.

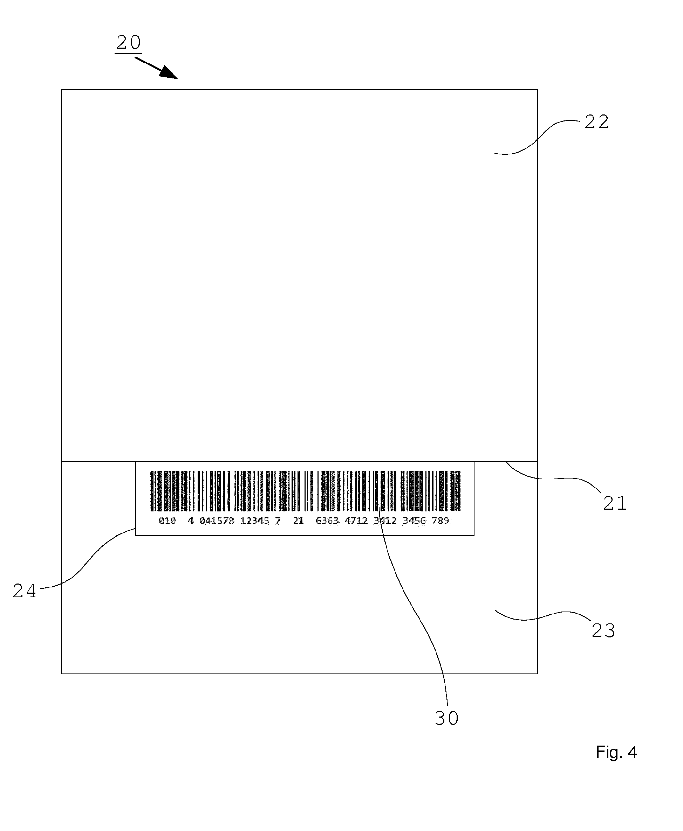

Figur 4 zeigt die Rückseite der Trägerkarte, wobei eine Fensterung 24 der Trägerkarte 20 sichtbar wird. Ein Einlesen des Barcodes 30 der Plastikkarte 10 ist daher ohne Weiteres möglich, auch ohne den Knickbereich 23 der Trägerkarte 20 umzuklappen.

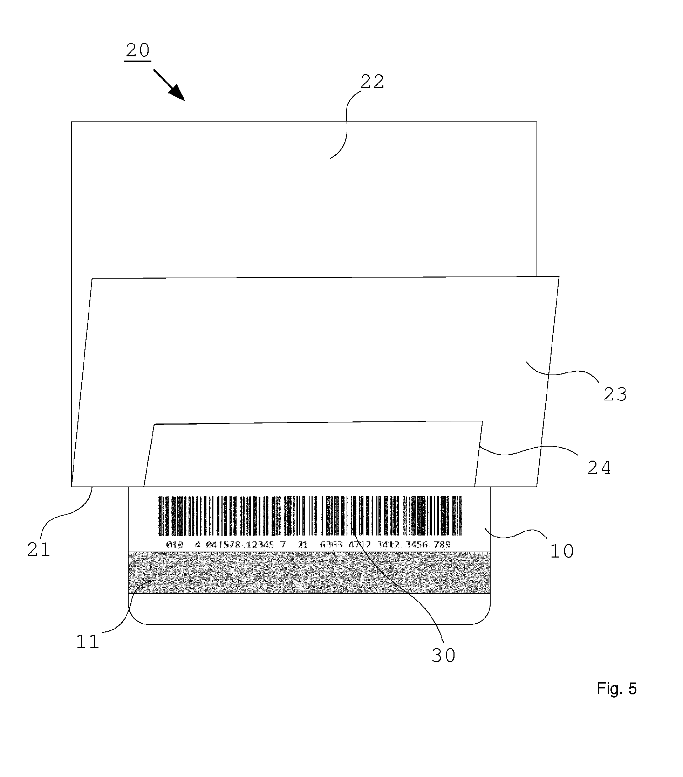

Figur 5 zeigt den Verbund aus Plastikkarte 10 und Trägerkarte 20 nochmals von der Rückseite der Trägerkarte 20 her gesehen, wobei nunmehr der Knickbereich 23 der Trägerkarte 20 nach oben geklappt ist. Hierdurch wird der Magnetstreifen 11 der Plastikkarte 10 freigelegt, so dass der Verbund zwischen Plastikkarte 10 und Trägerkarte 20 durch ein Magnetstreifenlesegerät hindurch gezogen werden kann, ohne hierbei die Plastikkarte 10 und die Trägerkarte 20 voneinander zu lösen. Diese Konfiguration ermöglicht es, sämtliche vorgesehenen Lesevarianten der auf der Plastikkarte 10 gespeicherten Informationen am Kassensystem zur Verfügung zu haben.

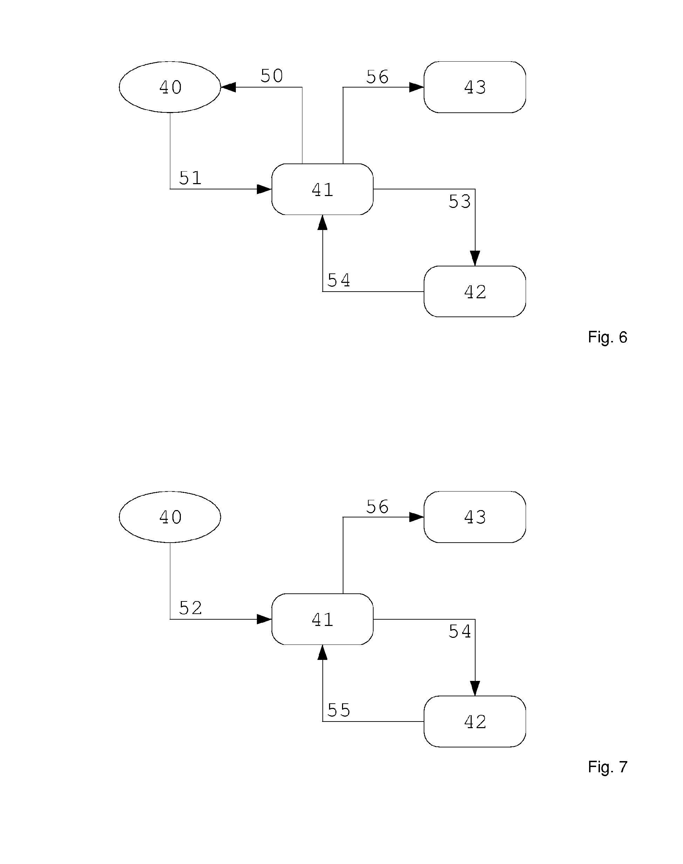

Figur 6 zeigt nunmehr eine schematische Darstellung des Ablaufs einer Generierung und eines Ausdrucks des Vouchers direkt an dem Kassensystem. Hierbei handelt es sich um eine Lösung, welche insbesondere für Rabattgutscheine von Supermärkten und dergleichen geeignet ist. Zunächst wird hierbei ein Kunde 40 einen Einkauf 51 tätigen, wobei die hierbei generierten Parameter, insbesondere Datum und Uhrzeit des Einkaufs sowie der Einkaufswarenwert von einem Kassensystem 41 erfasst werden. Diese Einkaufparameter werden in einem Schritt 53 an eine zentrale Datenverarbeitungseinrichtung 42 übermittelt, welche entweder direkt an das Kassensystem 41 gekoppelt sein oder aber ein externes System darstellen kann. Die zentrale Datenverarbeitungseinrichtung 42 prüft, ob die übermittelten Einkaufsparameter die Bedingungen für die Ausgabe eines Rabattgutscheines erfüllen und richtet im Falle dass dies zutrifft einen Datensatz für einen Voucher ein. Anschließend werden die darin gespeicherten Daten, insbesondere die Seriennummer und die Artikelnummer des neu erstellten Vouchers an das Kassensystem 41 in einem Schritt 54 versendet. Das Kassensystem 41 wird nunmehr einen Rabattgutschein ausgeben, was in einem Schritt 50 geschieht. Diese Ausgabe kann entweder durch die manuelle Ausgabe durch Kassenpersonal erfolgen oder aber direkt durch Ausdruck eines GS1-128-Barcodes auf einen Kassenbon oder ein separates Medium. Parallel informiert das Kassensystem 41 eine mit diesem verbundene Finanzbuchhaltung 43 über die Ausgabe des Vouchers.

Figur 7 zeigt die Abläufe bei der Einlösung eines ausgegebenen Rabattgutscheins in Form eines Vouchers. Hier wird der Kunde 40 nach einem Einkauf den Rabattgutschein an das Kassenpersonal übergeben, so dass der darauf enthaltene Barcode in einem Schritt 52 von dem Kassensystem 41 ausgelesen werden kann. Die darin enthaltenen und in einem einzelnen Schritt eingescanten Voucher-Daten werden in einem Schritt 54 an die zentrale Datenverarbeitungseinrichtung 42 weitergeleitet welche nun wiederum prüft, ob ein Datensatz mit übereinstimmender Artikelnummer 32 und Seriennummer 37 vorhanden ist. Sofern ein solcher Datensatz in einer Datenbank der zentralen Datenverarbeitungseinrichtung 42 vorhanden ist, wird die Einlösung dieses Vouchers dort vermerkt und eine Bestätigung der Einlösung des Vouchers in einem Schritt 55 an das Kassensystem 41 übermittelt. Auch in diesem Fall wird eine Meldung an die Finanzbuchhaltung 43 in einem Schritt 56 realisiert. Das Kassensystem 41 wird dann bei der Abwicklung des Einkaufs des Kunden 40 den gutgeschriebenen Betrag laut Rabattgutschein berücksichtigen.

Vorstehend beschrieben ist somit ein Voucher und ein Verfahren zur Ausgabe, zur Validierung und zur Einlösung eines Vouchers, bei welchen die erforderlichen, von einem Kassensystem einzulesenden Daten in einem gemeinsamen Barcode codiert sind, so dass die erforderlichen Daten in einem Einzelschritt ermittelt werden können und Fehlscans insbesondere durch das Scannen mehrerer Barcodes in falscher Reihenfolge oder das gleichzeitige Scannen von Barcodes vermieden werden. Gleichzeitig tritt eine deutliche Beschleunigung des Verfahrens ein, nachdem ein mehrfaches sukzessives Einscannen entfallen kann.

**BEZUGSZEICHENLISTE**

| | |
|---|---|
| 10 | Plastikkarte |
| 11 | Magnetstreifen |
| 12 | Klartext |
| 20 | Trägerkarte |
| 21 | Falzlinie |
| 22 | Haltebereich |
| 23 | Knickbereich |
| 24 | Fensterung |
| 30 | Barcode |
| 31 | Steuerzeichen |
| 32 | Artikelnummer |
| 33 | Steuerzeichen |
| 34 | primäre Kontennummer |
| 35 | Bank-ID |
| 36 | Produkt-ID |
| 37 | Seriennummer |
| 40 | Kunde |
| 41 | Kassensystem |
| 42 | zentrale Datenverarbeitungseinrichtung |
| 43 | Finanzbuchhaltung |
| 50 | Ausgabe eines Rabattgutscheins |
| 51 | Einkauf |
| 52 | Einlesen des Barcodes |
| 53 | Übermittlung von Parametern |
| 54 | Versendung von Voucherdaten |
| 55 | Bestätigung der Einlösung |
| 56 | Meldung an die Finanzbuchhaltung |

## Patentansprüche

1. Voucher zur Verwendung als Geschenk- oder Rabattgutschein, welcher eine Artikelnummer (32, EAN = European Article Number) und eine Seriennummer (37) eines Geschenks bzw. eines Rabattes maschinenlesbar in Barcode-Form trägt,
**dadurch gekennzeichnet, dass** die Artikelnummer (32) und die Seriennummer (37) in einem gemeinsamen Barcode (30), vorzugsweise einem 128-Bit-Barcode gemäß dem Standard GS1-128, zusammengefasst und gemeinsam auslesbar sind.

2. Voucher gemäß Anspruch 1, **dadurch gekennzeichnet, dass** der Barcode (30) mithilfe von Steuerzeichen (31, 33) in einen die Artikelnummer (32) enthaltenden Abschnitt und einen eine die Seriennummer (37) umfassende primäre Kontennummer (34, PAN = Primary Account Number) enthaltenden Abschnitt unterteilt ist, wobei die primäre Kontennummer (34) vorzugsweise neben der Seriennummer (37) eine Produkt-ID (36) und eine einen Anbieter des Vouchers identifizierende Bank-ID (35, BIN = Bank Identification Number) umfasst.

3. Voucher gemäß einem der Ansprüche 1 oder 2 in Form einer Plastikkarte (10) im Kreditkartenformat, wobei die Plastikkarte (10) mit ihrer den Barcode (30) tragenden Seite auf einer Trägerkarte (20), vorzugsweise durch Kleben oder Einstecken, angebracht ist, und die Trägerkarte (20) eine den Barcode (30) der angebrachten Plastikkarte (10) freigebende Fensterung (24) aufweist.

4. Voucher gemäß Anspruch 3, **dadurch gekennzeichnet, dass** der Plastikkarte (10) ein zusätzlicher Magnetstreifen (11) mit wenigstens einer Datenspur zugeordnet ist, in welcher zumindest einen Datenspur die Artikelnummer (32) und die Seriennummer (37) ebenfalls maschinenlesbar codiert enthalten sind.

5. Voucher gemäß Anspruch 4, **dadurch gekennzeichnet, dass** die Trägerkarte (20) über eine Falzlinie (21) in einen Haltebereich (22) und einen Knickbereich (23) unterteilt ist, wobei die Plastikkarte (10) auf den Haltebereich (22) aufgeklebt ist, während der Knickbereich (23) in einem ungeknickten Zustand der Trägerkarte (20) den Magnetstreifen (11) der Plastikkarte (10) verdeckt und die Trägerkarte (20) derart um die Falzlinie (21) knickbar ist, dass der Haltebereich (22) durch ein Umknicken von der Plastikkarte (10) weg den Magnetstreifen (11) der Plastikkarte (10) freigibt.

6. Voucher gemäß einem der Ansprüche 3 bis 5, **dadurch gekennzeichnet, dass** der Trägerkarte (20) ein Zusatz-Barcode mit Zusatz-Informationen zugeordnet ist, welcher auf der Trägerkarte (20) derart angeordnet ist, dass er von der Plastikkarte (10) verdeckt ist.

7. Voucher gemäß Anspruch 6, soweit auf Anspruch 5 zurückbezogen, **dadurch gekennzeichnet, dass** der Zusatz-Barcode auf dem Knickbereich (23) der Trägerkarte (20) angeordnet ist.

8. Voucher gemäß einem der Ansprüche 1 oder 2, welcher auf Papier ausgedruckt ist.

9. Voucher gemäß einem der vorhergehenden Ansprüche, **dadurch gekennzeichnet, dass** der Barcode (20) ergänzend nochmals im Klartext (12) zur manuellen Eingabe aufgedruckt ist.

10. Verfahren zur Ausgabe eines Vouchers gemäß Anspruch 8 zur Verwendung als Rabattgutschein, wobei einem Kassensystem (41) Bedingungen für die Ausgabe von Rabattgutscheinen (50) vorgegeben sind, während der Abwicklung eines Einkaufs (51) geprüft wird, ob die Bedingungen für die Ausgabe eines Rabattgutscheins (50) erfüllt sind und das Kassensystem (41) einen Rabattgutschein, vorzugsweise durch Ausdruck auf einen Kassenbon, ausgibt, wenn die Bedingungen für die Ausgabe eines Rabattgutscheins (50) erfüllt sind.

11. Verfahren gemäß Anspruch 10, **dadurch gekennzeichnet, dass** das Kassensystem (41) Einkaufsparameter, insbesondere Datum und Uhrzeit und/oder den Wert des Einkaufs, an eine zentrale Datenverarbeitungseinrichtung (42) übermittelt (53), die zentrale Datenverarbeitungseinrichtung (42) anhand der Einkaufsparameter prüft, ob die Bedingungen für die Ausgabe eines Rabattgutscheins (50) erfüllt sind, bei positiver Prüfung einen neuen Datensatz mit einer den Rabattgutschein charakterisierenden Artikelnummer (32) und einer den Rabattgutschein individualisierenden Seriennummer (37) anlegt und diese an das Kassensystem (41) zurücksendet, welches die Artikelnummer (32) und die Seriennummer (37) gemeinsam mit einer die zentrale Datenverarbeitungseinrichtung (42) charakterisierenden Bank-ID (35) zu einem 128-Bit-Barcode gemäß dem Standard GS1-128 codiert und auf den Kassenbon oder ein separates Medium ausdruckt.

12. Verfahren zur Validierung eines Vouchers gemäß einem der Ansprüche 1 bis 9, bei welchem der Barcode (30) des Vouchers über ein Kassensystem (41) eingelesen wird, das Kassensystem (41) aus dem Barcode (30) die Artikelnummer (32), die Seriennummer (37) und eine Bank-ID (35) herausliest, die Artikelnummer (32) und die Seriennummer (37) sodann an eine der Bank-ID (35) zugeordnete zentrale Datenverarbeitungseinrichtung (42) versendet, welche sodann überprüft, ob ein Datensatz mit der gleichen Seriennummer (37) und übereinstimmender Artikelnummer (32) vorhanden ist, und bei positiver Prüfung dem Datensatz einen Validierungsvermerk hinzufügt und an das Kassensystem (41) eine Bestätigung der Validierung übermittelt.

13. Verfahren gemäß Anspruch 12, **dadurch gekennzeichnet, dass** der Validierungsvermerk erst aufgrund einer nochmaligen Mitteilung des Abschlusses des Bezahlvorgangs vonseiten des Kassensystems (41) gesetzt wird und nach positiver Prüfung eine Bestätigung hierüber an das Kassensystem (41) übermittelt wird.

14. Verfahren zum Einlösen eines Vouchers gemäß einem der Ansprüche 1 bis 9, bei welchem der Barcode (30) des Vouchers über ein Kassensystem (41) eingelesen wird (52), das Kassensystem (41) aus dem Barcode (30) die Artikelnummer (32), die Seriennummer (37) und eine Bank-ID (35) herausliest, die Artikelnummer (32) und die Seriennummer (37) sodann an eine der Bank-ID (35) zugeordnete zentrale Datenverarbeitungseinrichtung (42) versendet, welche sodann überprüft, ob ein Datensatz mit der gleichen Seriennummer (37) und übereinstimmender Artikelnummer (32) vorhanden ist, und bei positiver Prüfung dem Datensatz einen Deaktivierungsvermerk hinzufügt und an das Kassensystem (41) eine Bestätigung der Einlösung (55) des Vouchers, vorzugsweise zusammen mit einem von dem Kassensystem (41) zu berücksichtigenden Gutschriftbetrag, übermittelt.
